# EUROPEAN PATENT SPECIFICATION

(11) **EP 1 460 431 B1**
(45) Date of publication and mention of the grant of the patent: **09.04.2008**
(21) Application number: 04003020.7
(22) Date of filing: 11.02.2004
(51) Int. Cl.: G01N 35/02

(54) **Automatic analyzer**
Automatisches Analysengerät
Analyseur automatique

(30) Priority: 19.03.2003 JP 2003074752
(43) Date of publication of application: 22.09.2004
(73) Proprietor: Hitachi High-Technologies Corporation, Tokyo 105-8717 (JP)
(72) Inventor: Suzuki, Hiroyuki, Hitachi High-Technologies Corp., Hitachinaka-shi Ibaraki 312-8504 (JP); Shibuya, Satoshi, Hitachi High-Technologies Corp., Hitachinaka-shi Ibaraki 312-8504 (JP); Yamazaki, Isao, Hitachi High-Technologies Corp., Hitachinaka-shi Ibaraki 312-8504 (JP); Hanawa, Masaaki, Hitachi High-Technologies Corp., Hitachinaka-shi Ibaraki 312-8504 (JP); Nishida, Masaharu, Hitachi High-Technologies Corp., Hitachinaka-shi Ibaraki 312-8504 (JP)
(74) Representative: Strehl Schübel-Hopf & Partner

(56) References cited:
- EP-A- 0 871 034
- EP-A- 1 284 113
- US-A- 6 117 392

## Description

### BACKGROUND OF THE INVENTION

### 1. Field of the Invention

The present invention relates to an automatic analyzer for carrying out quantitative/qualitative analysis of living body samples, such as blood and urine. More particularly, the present invention relates to an automatic analyzer that is flexibly operable, for example, in adaptation to an urgent sample or a STAT (Short Turn-Around-Time) sample.

### 2. Description of the Related Art

Automatic analyzers for automatically carrying out quantitative/qualitative analysis of living body samples, such as blood and urine, have become very popular primarily in big hospitals and clinical laboratories or analysis centers where many patient samples require to be processed in a short time. Depending on the processing capability required, large-, medium- and small-sized various automatic sample analyzers have been developed. In a large-sized analyzer capable of analyzing many samples, particularly, a plurality of sample containers containing samples are held in a holder called a sample rack, and the sample rack in such a state is conveyed to a plurality of analyzers by a conveyer line. Upon an analysis engineer just loading the sample rack into a sample rack entrance, an analytical process is carried out in an automatic manner until output of the analysis result.

EP-A-0 871 034 and US-6,117,392 disclose an automatic analyser which comprises a row of analytical modules for analysing clinical samples, and a conveyer line running along the row of modules for conveying samples to and from them. An upstream end of the conveyer line is provided with a First in First out buffer through which sample racks are supplied. The downstream end of the conveyer line is provided with a temporary buffer for holding samples waiting for re-examination, and a collector for collecting samples which have been analysed. EP-A-0 871 034 further discloses a buffer at said upstream end of the conveyer line for holding racks with reference samples used for periodic calibration and control of the analytical modules. US-6,117,392 discloses an input unit at said upstream end of the conveyer line for inputting samples requiring urgent analysis so that they bypass the First in First out buffer.

EP-A-1 248 113 discloses an automatic analyser from which the pre-characterising first part of claim 1 starts out. The analyser comprises sample supply and collection units, a buffer consisting of a disk for holding a plurality of samples, a conveyer running between the sample supply and collection units and the buffer, and an analytical module. A sample is supplies from the sample supply unit through the conveyer to the buffer and is then placed in a sampling position for being sampled by the analytical module. If an urgent sample is to be analysed, a general sample currently placed in the sampling position is retracted to the buffer so that, instead, the urgent sample can be placed in the sampling position. The buffer also holds samples waiting for the result of the analysis and for a decision on whether further measurements are needed.

In the above prior art, because the sample racks are conveyed and analyzed in accordance with the sequence in which they have been loaded into the sample rack entrance, a problem occurs in how to convey an urgent sample requiring urgent analysis to the analyzer with priority. One usual solution to cope with such a problem is, for example, to prepare a separate sample rack entrance dedicated to urgent samples. In practice, however, the problem is not yet satisfactorily overcome for the reason, e.g., that because of samples differing in degree of urgency from each other, it is necessary to set the priority order among the sample racks loaded into the sample rack entrance dedicated to urgent samples.

With the view of overcoming the above-mentioned problem, JP,B 8-33402 proposes an automatic sample analyzer in which a sample conveyer line has an outward trip and a return trip, a general sample is conveyed through the outward trip, and a calibration sample and an urgent sample are primarily conveyed through the return trip, so that the calibration samples and the urgent samples, which require to be measured at certain time intervals, can be sampled and analyzed at proper timing.

### SUMMARY OF THE INVENTION

It is, however, supposed that even the automatic sample analyzer disclosed in the above-cited JP,B 8-33402 cannot be sufficiently adapted for dealing of urgent samples depending on the circumstance of individual requests for sample analysis. In other words, actual urgent samples differ in degree of urgency from each other. For example, the degree of urgency ranges from a level at which one urgent sample requires analysis to be started at once by deferring analysis of another urgent sample that is currently under sampling for the analysis, to a level at which an urgent sample requires analysis to be carried out just prior to general samples.

With the automatic sample analyzer disclosed in the above-cited JP,B 8-33402, even upon an analysis request for an urgent sample at the former level, the analysis of such an urgent sample cannot be started until the analysis of another sample already set on the conveyer line is finished.

Accordingly, it is an object of the present invention to provide an automatic analyzer which can shorten a waiting time to analysis, particularly, for a sample having a high degree of urgency. This object is solved by an automatic analyzer according to claim 1. The dependent claims relate to preferred embodiments of the invention.

To achieve the above object, an embodiment of the present invention is constituted as follows:

An automatic analyzer comprises an analytical module for analyzing a living body sample; a conveyer unit for conveying sample racks to the analytical module and conveying sample racks, for which sampling has completed, from the analytical module; a sample buffer capable of holding a plurality of sample containers containing samples, supplying desired ones of the sample containers held on the sample buffer to the conveyer unit, and receiving the sample containers returned from the analytical module through the conveyer unit; a sample supply unit for supplying samples to the sample buffer; and a sample collection unit for collecting samples from the sample buffer.

The analytical module is, for example, a biochemical analyzer in which a reagent and a sample are mixed with each other and quantitative/qualitative analysis of an ingredient in the sample is carried out by measuring a change in color of the reagent, an immunity analyzer in which a sample is mixed with a reagent containing a marker ingredient capable of specifically bonding to a target ingredient in the sample, and quantitative/qualitative analysis of the marker ingredient is carried out, or a nucleic acid analyzer for carrying out analysis using a reagent which specifically hybridizes with a target nucleic acid. However, the analytical module is not limited to those examples and may be any other suitable device so long as it can analyze living body samples.

The term "sample rack" means a rack on which one or more sample containers capable of containing samples are loadable. The sample container may be of the any suitable type, e.g., a test tube or a blood collecting container, so long as it can contain a sample. A typical example of the conveyer unit has a structure in which a base supporting the sample racks thereon is movable in itself like a belt conveyer, or in which the sample rack is held by an arm, a claw or the like to be able to slide on a base without moving the base itself. However, the conveyer unit may have any other suitable structure so long as it can physically move the sample racks.

### BRIEF DESCRIPTION OF THE DRAWINGS

Fig. 1 is a layout view of an automatic analyzer according to a first embodiment of the present invention.
Fig. 2 is a processing flowchart for a sample rack in the automatic analyzer according to the first embodiment.
Fig. 3 is a processing flowchart for sample analysis in the automatic analyzer according to the first embodiment.
Fig. 4 is a block diagram of a control system in the automatic analyzer according to the first embodiment.
Fig. 5 is a processing flowchart for an urgent sample in the automatic analyzer according to the first embodiment.
Fig. 6 shows a slot assignment window for a first rotor in the automatic analyzer according to the first embodiment.
Fig. 7 is a layout view of an automatic analyzer according to a second embodiment of the present invention.
Fig. 8 is a layout view of an automatic analyzer according to a third embodiment of the present invention.

### DESCRIPTION OF THE PREFERRED EMBODIMENTS

### System Construction

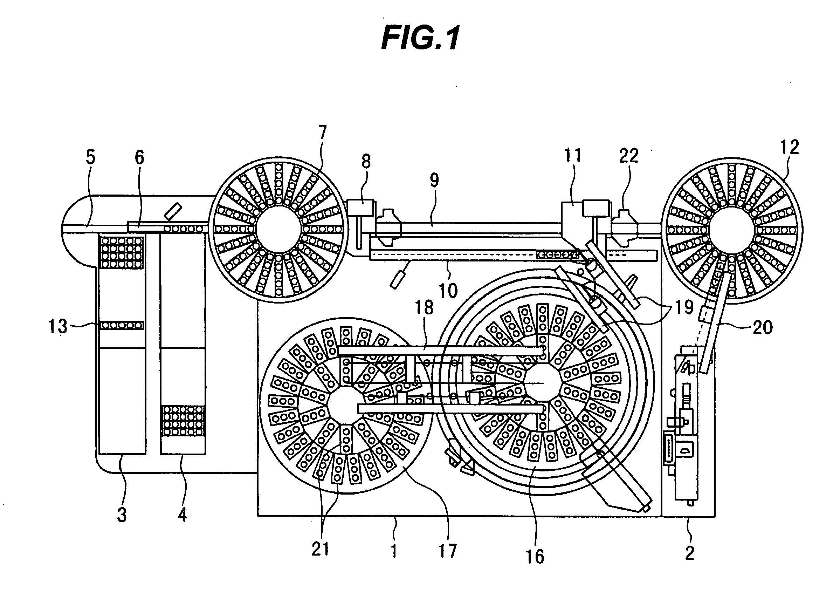

The construction of an automatic analyzer according to a first embodiment of the present invention will be described below with reference to Fig. 1.

In Fig. 1, two rack trays (not shown) are removably set in a general sample loading unit (rack loader) 3. Each rack tray can contain a number of sample racks 13 side by side. The sample racks on each rack tray are pushed out to a supply line (first conveyer line 6) one by one using a movable lever (not shown) that is horizontally driven by a lever driver part (not shown). The sample rack 13 shown in Fig. 1, by way of example, is a box-shaped container holder and contains five sample containers. However, the shape of the sample rack and the number of sample containers loadable therein are not limited to those employed in this embodiment, and various variations can be made so long as the sample rack 13 is able to contain one or more sample containers and to move on the conveyer line.

The sample rack 13 loaded in the general sample loading unit 3 holds sample containers containing general samples that are not particularly classified as ones having a high degree of urgency. An urgent sample loading unit 5 is disposed in the upstream side of the supply line (first conveyer line 6) on which the sample rack 13 is movable. Loaded into the urgent sample loading unit 5 is a sample rack holding sample containers, which contain urgent samples requiring processing results (e.g., analysis results) to be urgently obtained. The sample rack set to an urgent sample receiving position in the urgent sample loading unit 5 is, as described later, conveyed to and analyzed in an analysis unit (1 or 2) with priority over the sample rack conveyed from the general sample loading unit 3.

A conveyer system for conveying sample racks comprises a first conveyer line 6, a first rack rotor 7, a first line switching unit 8, a second conveyer line 9, a third conveyer line 10, a second line switching unit 11, a fourth conveyer line 22, and a second (rack) rotor 12. The first conveyer line 6 conveys sample racks among the general sample loading unit 3 or the urgent sample loading unit 5, a sample rack collecting unit (rack unloader) 4, and the first rack rotor 7. The first conveyer line 6 is movable in both-way. The first rack rotor 7 has slots formed therein to be able to hold twenty sample racks 13. The term "slot" means a space for holding the sample rack 13 in it. The first rotor 7 serves as a junction for sending general samples or urgent samples to the third conveyer line 10, but it may also have slots for temporarily receiving the sample rack under sampling or the sample rack in a sampling standby state for temporary evacuation when the urgent sample is loaded. Further, the first rotor 7 may always hold a sample rack, which contains a QC (Quality Control) sample used for ensuring the analysis result and a calibration sample used for calibrating the analysis system, so that those samples can be measured as required or periodically by the analysis unit under operation. In addition, the first rotor 7 functions as a re-analysis buffer for holding a sample rack, for which sampling into the analysis unit has completed, to be ready for a request for re-analysis. The request for re-analysis is a request for carrying out the analysis again to ensure reliability of the analysis when the analysis result is outside the range obtained from the ordinary analysis. The request for re-analysis is not designated by a system operator for each sample, but it is issued based on a judgment automatically made by the analysis system on the analysis result. The sample rack on the first rotor 7 is taken in by the first line switching unit 8 for transfer onto the third conveyer line 10. The third conveyer line 10 is a line for conveying the sample rack to a sampling position for the analysis unit. The right end of the third conveyer line 10 serves as the sampling position for the analysis unit. While samples in one sample rack are under sampling, the first line switching unit 8 can keep a next sample rack in a standby state at the left end of the third conveyer line 10. The sample rack for which the sampling has completed is transferred onto the second conveyer line 9 or the fourth conveyer line 22 by the second line switching unit 11. The sample rack having been transferred onto the second conveyer line 9 is returned to the first rotor 7 through the first line switching unit 8. If the samples in the sample rack 13 are requested for ISE (Ion Selective Electrode) analysis, the relevant sample rack is loaded onto the second rotor 12 through the fourth conveyer line 22. When the ISE analysis is completed for the sample rack 13 on the second rotor 12, the relevant sample rack is returned to and placed on the first rotor 7 through the fourth conveyer line 22, the second line switching unit 11, the second conveyer line 9, and the first line switching unit 8. The sample rack for which all of the required analysis has completed is collected into the sample rack collecting unit 4 from the first rotor 7 through the first conveyer line 6.

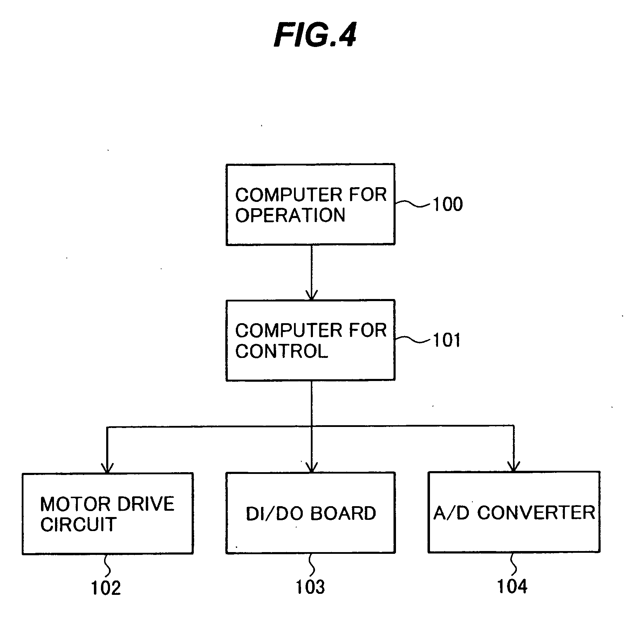

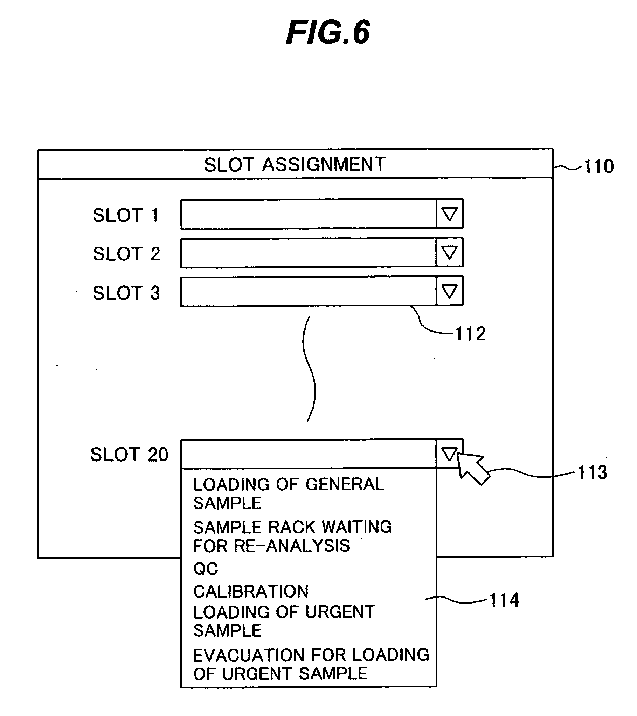

Fig. 6 shows, by way of example, a slot assignment window 110 for designating how 20 slots of the first rotor are used. The window of Fig. 6 is opened by a computer 100 for operation which is shown in Fig. 4 illustrating the configuration of a control system, and information set on the window is transferred to a computer 101 for control to actually operate the first rotor 7. The slot assignment window 110 has input fields 112 corresponding to the 20 slots. Each input field is a combo box for data entry in this embodiment, but it may be a box in which characters, etc. are entered in an ordinary manner. Upon a combo button being depressed, a slot assignment pull-down menu 114 is displayed which includes items "Loading of General Sample", "Sample Rack Waiting for Re-Analysis", "QC", "Calibration", "Loading of Urgent Sample", and "Evacuation for Loading of Urgent Sample". Any one of those items is selected by using a mouse pointer 113. "Loading of General Sample" means that the relevant slot holds the general sample rack. "Sample Rack Waiting for Re-Analysis" means a slot assigned to the sample rack that is waiting for a judgment of re-analysis after processing of the analysis. "QC" means a slot for holding a QC sample. "Calibration" means a slot for a calibration sample. "Loading of Urgent Sample" means a slot for receiving the sample rack containing urgent samples. This slot is usually held in a vacant state. "Evacuation for Loading of Urgent Sample" means a slot to which the sample rack located on the third conveyer line 10 and held under sampling or in a sampling standby state is temporarily evacuated when an urgent sample is loaded.

In the system of Fig. 1, two kinds of analysis units 1 and 2 are disposed as sample processing units along the conveyer path between the general sample loading unit 3 and the sample rack collecting unit 4. The analysis unit 2 is a sample processing unit, also called an ISE analysis unit, for analyzing electrolyte ingredients in a measuring section where ion selective electrodes are arranged. A sample is pipetted from the sample rack 13 on the conveyer line into a sample dilution container set in the analysis unit 2 by using a pipette nozzle 20 of a sampling device. Then, the sample is diluted with a diluent and is introduced to the measuring section for analysis of various ions, such as sodium, potassium and chloride.

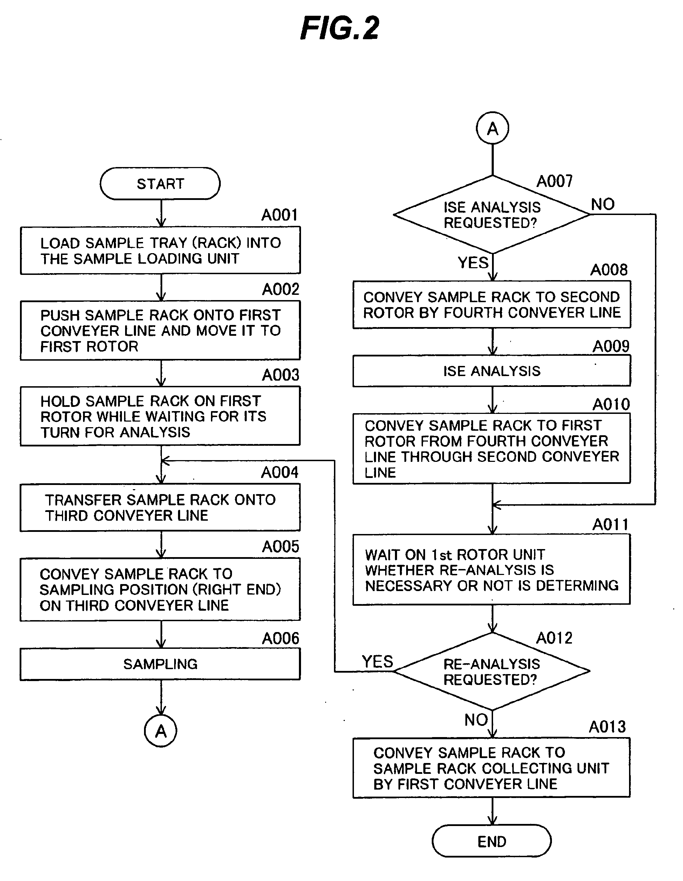

Movement of each sample rack will be described below with reference to Fig. 2.

If the sample in a sample rack to be analyzed is a general sample, it is set on a sample tray, which is then loaded into the general sample loading unit (A001). If the sample rack contains an urgent sample, it is set, though not shown, on a sample tray and loaded into the urgent sample loading unit. Each of the sample racks having been loaded into the sample loading unit waits for its turn so that they will be successively sent to and analyzed in the analysis unit. When its turn for analysis comes around, the sample rack is pushed onto the first conveyer line and then placed on the first rotor (A002). On the first rotor, the sample rack waits for until a vacancy occurs on the third conveyer line (A003). When a vacancy occurs on the third conveyer line, the sample rack is pushed to the first line switching unit and is transferred onto the third conveyer line (A004). If the sampling position is vacant, the sample rack is conveyed to the sampling position for sampling into the analysis unit (A005,A006). After the completion of the sampling, the subsequent flow of movement of the sample rack changes depending on whether the sample in the sample rack is requested for ISE analysis (A007). If there is a request for ISE analysis, the sample rack is transferred onto the fourth conveyer line by the second line switching unit and is conveyed to the second rotor (A008). The second rotor is rotated to bring the relevant sample rack on the second rack into a sampling position for the ISE analysis unit. In the sampling position, the sample is pipetted into the ISE analysis unit (A009). Upon the completion of the ISE analysis, if there is a vacancy on the first rotor, the sample rack is moved back to the first rotor (A010) where it waits for determination as to whether re-analysis is necessary or not (A011). If there is no request for ISE analysis(A007), the sample rack is transferred onto the second conveyer line by the second line switching unit and is conveyed to the first rotor where it waits for determination as to whether re-analysis is necessary or not. If it is determined for the sample rack waiting on the first rotor for determination as to the presence or absence of a request for re-analysis that the analysis is completed with a satisfactory result and the re-analysis is not necessary (A012), the sample rack is transferred from the first rotor onto the first conveyer line and is collected into the sample rack collecting unit (A013). If there is a request for re-analysis, the computer returns to A004 and executes again the processing subsequent to A004.

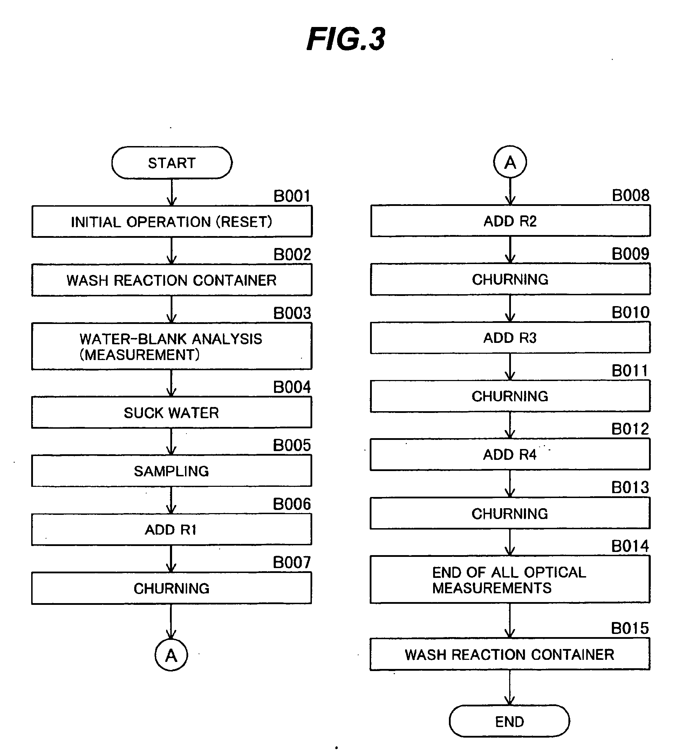

The analysis unit is a sample processing unit in which a sample and a reagent are mixed with each other to develop a reaction, and a solution colored with the reaction is measured by an optical measuring device such as a photometer. Fig. 3 shows, by way of example, processing steps of analysis carried out by the analysis unit. In initial operation (reset), assignment of reaction containers, etc. are performed (B001). The reaction containers are arranged along the circumference of a reaction disk. First, each of the reaction containers to be used in the analysis is washed (B002), and water-blank analysis is carried out to confirm that the reaction container is usable (B003). After the confirmation, the water in the reaction container is sipped and discarded (B004). Then, the sample is pipetted into the reaction container (B005), and a first reagent R1 is added to the reaction container, and the sample and the first reagent R1 are churned with each other (B006,B007). Subsequently, reagents R2 to R4 are added and churned at intervals of predetermined periods of time in a repeated manner (B008 to B0013). Depending on the kind of analysis, those reagents are not used at all, or only a part of them is used. The analysis reaction is usually carried out as a 3-minute reaction, a 4-minute reaction, a 5-minute reaction, a 10-minute reaction, etc. However, any other suitable period of time may also be selected for the analysis reaction.

The sample rack collecting unit 4 collects, on a rack tray, the sample racks which contain the samples having finished the analysis and which have been conveyed to the sample rack collecting unit 4. When the sample rack arrives a collection line disposed in the sample rack collecting unit 4, it is positioned to an inlet of a drive tray by a rack moving unit, which is operated by a belt, and then pushed onto a corresponding rack tray by a rack pushing unit.

Fig. 4 shows, by way of example, a control system necessary for controlling the analytical module system described above. An operation computer 100 is used for operation of the overall system. The operation computer 100 includes a keyboard for inputting analysis information and sample information, a pointing device such as a mouse, etc., and displays necessary information on a display as required. A control computer 101 installs a real-time OS therein to operate the analytical module system at proper timing. The control computer 101 is connected to a motor drive circuit 102, a DI/DO board 103, and an A/D converter 104 for taking in analyzed data. Motors controlled by the motor drive circuit 102 drive the first to fourth conveyer lines, the first and second rotors, the first and second line switching units, sample nozzles 19 (see Fig. 1), reagent nozzles 18, ISE sample nozzles 20, etc. The motor drive circuit also controls a syringe, an electromagnetic valve and so on for controlling the sipping and breathing-out operations of each nozzle. Sensor inputs of a temperature sensor, a position sensor, a liquid-level sensor, etc. are connected to the DI/DO board 103.

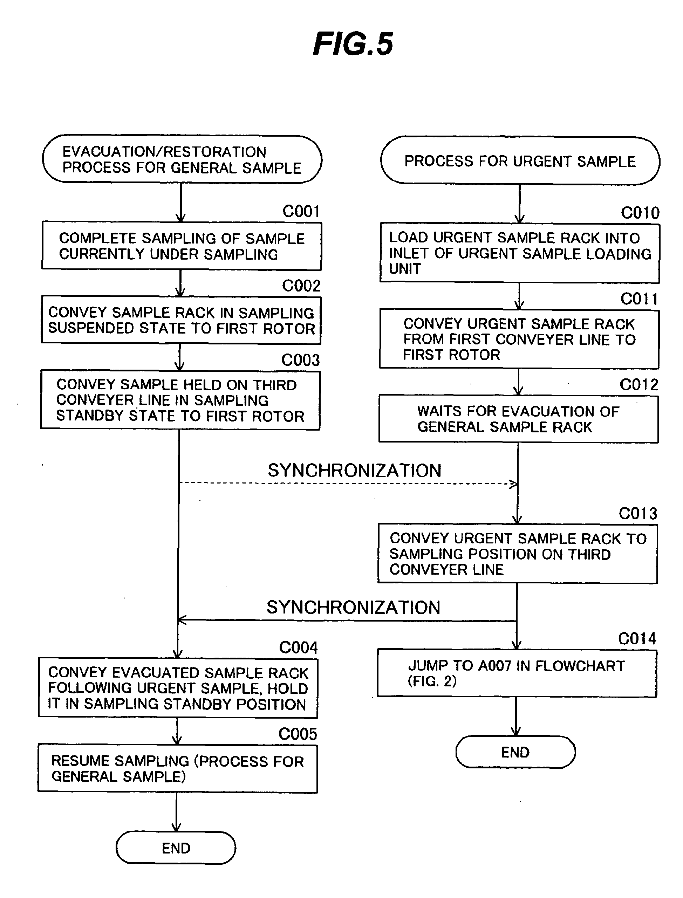

The operation carried out upon loading of an urgent sample will be described below with reference to Fig. 5. The operation is divided into a process for evacuating and restoring the sample rack which is under processing as a general sample, and a process for interrupt analysis of an urgent sample. When executing the evacuation/restoration process for the general sample, it is required to wait for the end of sampling of the general sample that is under sampling at that time (C001). Because a plurality of analysis items are usually designated for one sample, the sample is pipetted into the reaction containers placed on a reaction disk corresponding to the designated number of analysis items. If the sampling of the general sample currently under sampling is interrupted for analysis of an urgent sample, the reagents, the washing liquid, the operation time, etc. are uselessly wasted. In this embodiment, therefore, an interruption for analysis of the urgent sample is made after all steps of the sampling for the general sample currently under sampling. Even if a sample to be subjected to sampling still remains in the general sample rack, the general sample rack is evacuated for interrupt analysis of the urgent sample rack at timing at which the sampling step shifts from one to another sample. Because the evacuation position for the sample rack in the sampling suspended state is prepared on the first rotor, the relevant general sample rack is transferred onto the second conveyer line by the second line switching unit and then returned to the first rotor (C002). Likewise, the sample rack held in the sampling standby state on the third conveyer line is also evacuated to the first rotor (C003). In this respect, the first line switching unit and the third conveyer line may be constructed to be movable in both-way such that the relevant sample rack is directly evacuated to the first rotor through the third conveyer line and the first line switching unit without passing the second line switching unit. This modification is intended to cut down a time required for the evacuation process by carrying out both the evacuation processes for the sample rack in the sampling suspended state and the sample rack in the sampling standby state in parallel.

In parallel to the evacuation processes for the sample rack in the sampling suspended state and the sample rack in the sampling standby state, the urgent sample rack is conveyed to the sampling position. When the urgent sample rack is loaded into the entrance of the urgent sample loading unit 5 (C010), it is conveyed on the first conveyer line and then placed in the urgent sample slot on the first rotor (C011). In the urgent sample slot, the urgent sample rack waits for the completion of the evacuation processes for the sample rack in the sampling suspended state and the sample rack in the sampling standby state (C012). Upon the completion of the evacuation processes, the urgent sample rack is transferred onto the third conveyer line by the first line switching unit and then conveyed to the sampling position (C013). Thereafter, the urgent sample is processed in accordance with the control flow subsequent to A007 in Fig. 2 (C014).

On the other hand, when the sampling of the urgent sample is started, the sample rack in the sampling suspended state, which has been evacuated on the first rotor so far, is transferred by the first line switching unit to the sampling standby position on the third conveyer line (C004). Upon the completion of the sampling of the urgent sample, the relevant sample rack is moved to the sampling position at once to resume the sampling of one or more samples which have not yet been subjected to sampling (C005).

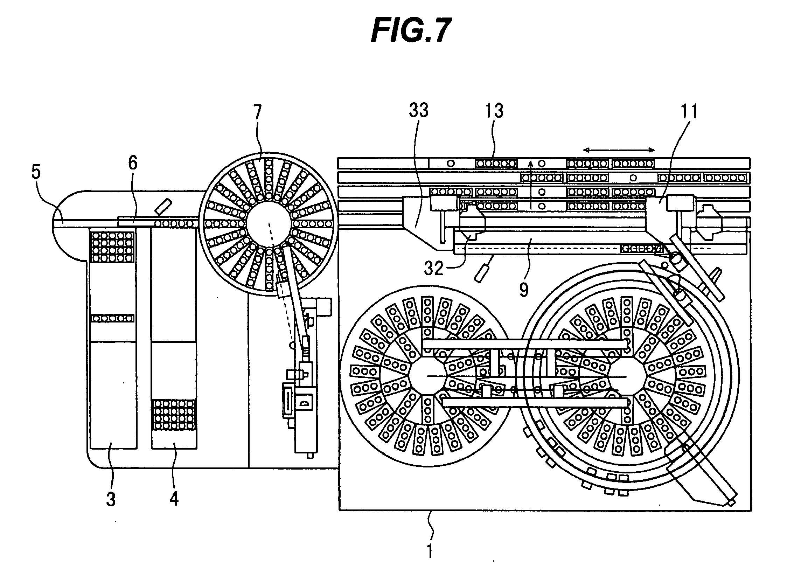

The construction of an automatic analyzer according to a second embodiment of the present invention will be described below with reference to Fig. 7.

In this second embodiment, the second rotor 12 in the form of a solid of revolution in Fig. 1 is replaced with a box-shaped unit (hereinafter referred to as a "second buffer unit") disposed on the back side of the analysis unit 1. With such an arrangement, the size of the overall system according to this second embodiment is smaller than that in the first embodiment, and a more compact analysis system can be provided.

The second buffer unit includes a plurality of independent lines 31 which are extended parallel to the second conveyer line 9 and are movable in both-way. The sample rack 13 for which the analysis has completed is transferred from the fourth conveyer line to the second conveyer line 9 by the second line switching unit 11 and is conveyed to a second buffer unit entrance 32 with the second conveyer line 9. A third line switching unit 33 is disposed at the second buffer unit entrance 32 and transfers the sample rack 13 into the second buffer unit. Each of the lines in the second buffer unit can hold a plurality of sample racks 13 independently of one another. Also, at least one or more vacant positions are left on each line. For example, when the sample rack 13 is to be placed anywhere on the last line, the vacant positions on the lines prior to the last line are all aligned with the second buffer unit entrance 32. Then, the sample rack 13 having been conveyed to the second buffer unit entrance 32 with the second conveyer line 9 is placed in the designated position on the last line by the third line switching unit 33 after passing through all the vacant positions of the lines prior to the last line. The sample racks 13 may be placed in the second buffer unit in regular order from the most front line or at random. Anyway, the positions where the sample racks have been placed are stored in a storage. The sample rack 13 stands by in the second buffer unit until the analysis results of all samples set in the sample rack 13 are obtained. With the second buffer unit thus constructed, as with the first embodiment, it is possible to access the sample racks 13 in the second buffer unit at random and hence to efficiently process the sample racks 13 for which the analysis results have been obtained. Furthermore, the sample rack 13 for which the analysis result has been obtained is returned to the second conveyer line 9 by third line switching unit 33 with the aid of the vacant positions in a way reversal to that described above. If there is no request for re-analysis, the sample rack 13 is collected into the sample rack collecting unit 4 through the first rotor 7. On the other hand, the sample rack 13 which is requested for re-analysis is transferred from the second conveyer line 9 onto the second conveyer line 9 again by the first line switching unit 8, and is re-analyzed on the required items by the analysis unit 1. In the analysis system of this second embodiment, because the second rotor is replaced with the box-shaped second buffer unit, the ISE analysis unit 2 is disposed on the side near the first rotor 7. Stated another way, the ISE analysis unit 2 is disposed on the upstream side in the analysis system. Therefore, when the sample is requested for ISE analysis, the ISE analysis can be carried out on that sample prior to the ordinary analysis. Sampling for the ISE analysis may be performed directly from the sample held on the first rotor 7 or performed from the sample moved into a lead line (not shown) which is provided in the ISE analysis unit 2 for the purpose of sampling. Such a modification in the manner for the ISE analysis is similarly applicable to the first embodiment. As an alternative, depending on how the analysis unit 1 and the ISE analysis unit 2 are jammed in analysis schedule, it is possible to select which one of the ISE analysis and the measurement required in the analysis unit 1 is first carried out. In the case of carrying out first the ISE analysis and then the measurement required in the analysis unit 1, the sample rack 13 is conveyed to and analyzed in the analysis unit 1 through the same route in accordance with the same control flow as those in the first embodiment. Upon the completion of the analysis, the sample rack is conveyed to the first rotor or the second buffer unit where it waits for until the analyzed result is obtained.

The sample rack containing the calibration sample, the quality control sample, etc., for which re-analysis is not required, is transferred from the fourth conveyer line onto the second conveyer line 9 by the second line switching unit 11 after the end of sampling into the analysis unit 1. Then, that sample rack is moved back to the first rotor 7 with the second conveyer line 9 and then collected into the sample rack collecting unit 4. There is a risk that a processing load is concentrated on the second conveyer line 9 because it serves to convey the sample rack 13 from the first rotor 7 to the analysis unit 1, to convey the sample rack 13 for return which has finished the analysis, and to convey the sample rack 13 from the second buffer unit for re-analysis or return. In view of such a risk, the most front line in the second buffer unit may be operated as a line dedicated to return of the sample rack 13 so that the processing load is distributed.

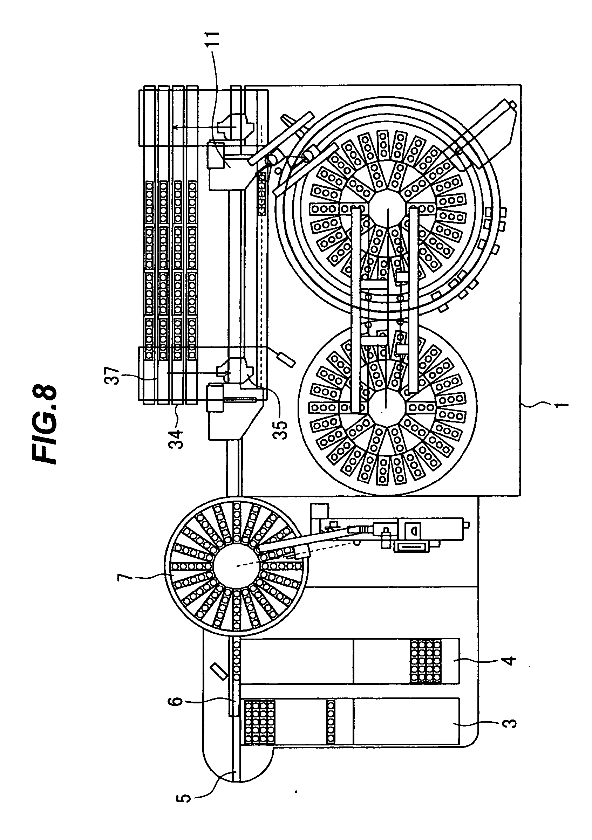

The construction of an automatic analyzer according to a third embodiment of the present invention will be described below with reference to Fig. 8.

In this third embodiment, the second rotor is replaced with a box-shaped second buffer unit disposed on the back side of the analysis unit 1 as in the second embodiment.

The second buffer unit includes a line 34 which is extended parallel to the second conveyer line 9 and is movable in both-way. The line 34 is driven by a belt on which partitions are provided to form a plurality of lines. Each of the lines can hold a plurality of sample racks on it. The first and second line switching units 8, 11 are movable up to the last line in the second buffer unit. The sample rack 13 for which the analysis has completed is transferred to a line entrance 35 of the second buffer unit by the second line switching unit 11. With rotation of the belt, the sample rack 13 is received into the second buffer unit. Sample stoppers 37 are disposed at sample rack delivery exits 36 of the respective lines independently of each other, and the belt is continued to rotate until the sample rack 13 strikes against the corresponding sample stopper 37. The sample racks 13 may be placed in the second buffer unit in regular order from the most front line or at random. Anyway, at what number position on which one of the lines each of the sample racks has been placed is stored in a storage. The sample rack 13 stands by in the second buffer unit until the analysis results of all samples set in the sample rack 13 are obtained.

The sample rack 13 for which the analysis results have been obtained are delivered as follows. For example, when delivering the sample rack 13 at the head position in the most front line, the first line switching unit 8 is first moved to the position of the most front line in the second buffer unit. The sample stopper 37 in the most front line is opened, and the belt is rotated to convey the sample rack 13 into the first line switching unit 8. The sample rack 13 is then returned to the second conveyer line 9 by the first line switching unit 8. If there is no request for re-analysis, the sample rack 13 is collected into the sample rack collecting unit 4 through the first rotor. On the other hand, the sample rack 13 which is requested for re-analysis is transferred from the second conveyer line 9 onto the third conveyer line 10 again by the first line switching unit 8, and is re-analyzed on the required items by the analysis unit 1.

Since there is a possibility that the sample rack having been at the second position on the most front line is positioned ahead of the corresponding sample stopper 37, the belt is temporarily rotated in the reversed direction to move the relevant sample rack backward. Thereafter, the corresponding sample stopper 37 is closed and the belt is rotated again forward until the relevant sample rack strikes against the sample stopper 37.

When delivering the sample rack 13 at the third position in the last line, processing steps are executed as follows. In a similar way to that described above, the sample rack 13 at the first position in the last line is transferred to the first line switching unit 8 and is returned to the second conveyer line 9. The first sample rack 13 having been returned to the second conveyer line 9 is conveyed to the second line switching unit 11 with the second conveyer line 9. The second line switching unit 11 transfers the first sample rack 13 again to the last line in the second buffer unit such that the first sample rack 13 is placed at the tail position in it. Simultaneously, the sample rack 13 at the second position in the last line is transferred to the first line switching unit 8. At this time, the first line switching unit 8 is already moved so as to position on the last line. Then, the second sample rack 13 is placed at the tail position in the last line through the same processing steps as those described above, and the third sample rack is transferred to the first line switching unit 8. Subsequently, the third sample rack is conveyed to the sample rack collecting unit 4 or the analysis unit 1. With the third embodiment thus constructed, random access to the sample racks placed in the second buffer unit can be realized although the efficiency is inferior to those in the first and second embodiments.

According to the present invention, in an automatic analyzer with high performance, a sufficient area for use as, e.g., a re-analysis buffer, can be ensured while realizing a compact system size. Also, the automatic analyzer is promptly adaptable for an analysis request for an urgent sample. Further, flexible operation of the automatic analyzer can be achieved by assigning slots formed on a rotor to various roles at the operator's discretion.

## Claims

1. An automatic analyser comprising:
an analytical module (1, 2) for analysing living body samples;
a sample supply unit (3, 5) for supplying said samples;
a sample collection unit (4) for collecting said samples;
a conveyer unit (9, 10) for conveying sample racks (13) with samples to be analysed from said sample supply unit (3, 5) to said analytical module (1, 2) and conveying sample racks, for which sampling has been completed, from said analytical module to said sample collection unit (4); and
a sample buffer arrangement (7, 12, 31, 34) arranged on the conveyer unit (9, 10) for receiving samples from the sample supply unit (3, 5), holding them, supplying desired ones of them to the analytical module, receiving samples returned from the analytical module and supplying returned samples to the sample collection unit,
**characterised in that**
said sample buffer arrangement comprises at least two buffers including a first buffer (7) disposed at one end of said conveyer unit (9, 10) for receiving samples from the sample supply unit (3, 5), holding them and supplying desired ones of them to said conveyer unit (9, 10) for conveyance to said analytical module (1, 2), and a second buffer (12, 31, 34) disposed at the other end of said conveyer unit (9, 10) for holding samples for which sampling has completed, returning samples to be re-analysed to said analytical module (1, 2) and retuning samples not to be re-analysed to said sample collection unit (4),
wherein said conveyer unit (9, 10) is adapLcd to transfer samples for which sampling has completed Lo said second buffer (12, 31, 34)for them to wait for analysis results, and to evacuate samples still to be subjected to sampling to said first buffer (7) if another sample requires urgent analysis, said first buffer (7) being adapted to supply said sample requiring urgent analysis to the analytical module (1, 2) via the conveyer unit (9, 10) from which samples have been evacuated.

2. An automatic analyser according to claim 1, comprising:
an urgent sample loading unit (5) for receiving an urgent sample and conveying it to the first buffer (7), and
a controller (101) for, when an urgent sample is loaded into the urgent sample loading unit (5), controlling said analytical module (1, 2) to complete sampling of general samples currently being subjected to sampling, and controlling the conveyer unit (9, 10) to convey general samples still to be subjected to sampling to the first buffer (7), to convey the urgent sample to the analytical module and to convey general samples in the first buffer (7) to the analytical module after said urgent sample has been analysed.

3. The analyzer of claim 1 wherein said conveyer unit (6, 9, 10) has one conveyer line and a mechanism for moving the one conveyer line back and forth.

4. The analyzer of claim 1, wherein said conveyer unit (6, 9, 10) has at least two conveyer lines and each including a mechanism for moving the conveyer line back and forth.

5. The analyzer of claim 1, wherein said conveyer unit (6, 9, 10) has at least two conveyer lines of which one (10) is dedicated to forward movement and another (9) is dedicated to backward movement.

6. The analyzer of any preceding claim, wherein the sample buffer arrangement (7, 12) has a structure in which a plurality of sample racks (13) are held substantially along spokes of a rotatable base.

7. The analyzer of any one of claims 1 to 5, wherein the sample buffer arrangement (31, 34) has a structure holding a plurality of sample racks (13) arranged on a base to lie side by side substantially in one direction, the structure including a mechanism for moving said base in a direction substantially perpendicular to the direction in which said sample racks (13) are arranged.

## Patentansprüche

1. Automatischer Analysator, aufweisend:
ein Analysemodul (1, 2) zum Analysieren von Proben eines lebenden Körpers,
eine Probenzuführeinheit (3, 5) zum Zuführen der Proben,
eine Probenrücknahmeeinheit (4) zum Zurücknehmen der Proben,
eine Fördereinheit (9, 10) zum Fördern von Probengestellen (13) mit zu analysierenden Proben von der Probenzuführeinheit (3, 5) zum Analysemodul (1, 2) und zum Fördern der Probengestelle, für die eine Probenentnahme beendet wurde, vom Analysemodul zur Probenrücknahmeeinheit (4), und
eine an der Fördereinheit (9, 10) angeordnete Probenpufferanordnung (7, 12, 31, 34), um Proben von der Probenzuführeinheit (3, 5) entgegenzunehmen, sie zu halten, gewünschte von ihnen dem Analysemodul zuzuführen, vom Analysemodul zurückgegebene Proben entgegenzunehmen und die zurückgegebenen Proben der Probenrücknahmeeinheit zuzuführen,
**dadurch gekennzeichnet, dass** die Probenpufferanordnung mindestens zwei Puffer aufweist, die einen an einem Ende der Fördereinheit (9, 10) angeordneten ersten Puffer (7), um Proben von der Probenzuführeinheit (3, 5) entgegenzunehmen, sie zu halten und gewünschte von ihnen der Fördereinheit (9, 10) zum Fördern zum Analysemodul (1, 2) zuzuführen, und einen am anderen Ende der Fördereinheit (9, 10) angeordneten zweiten Puffer (12, 31, 34), um Proben, für die die Probenentnahme beendet wurde, zu halten, wieder zu analysierende Proben an das Analysemodul (1, 2) zurückzugeben und nicht wieder zu analysierende Proben an die Probenrücknahmeeinheit (4) zurückzugeben, enthalten,
wobei die Fördereinheit (9, 10) eingerichtet ist, Proben, für die die Probenentnahme beendet wurde, an den zweiten Puffer (12, 31, 34) zu übermitteln, damit sie auf Analyseergebnisse warten, und Proben, die noch der Probenentnahme unterworfen werden sollen, zum ersten Puffer (7) hin auszulagern, wenn eine andere Probe eine dringende Analyse benötigt, und wobei der erste Puffer (7) eingerichtet ist, die eine dringende Analyse benötigende Probe über die Fördereinheit (9, 10), aus der Proben ausgelagert wurden, dem Analysemodul (1, 2) zuzuführen.

2. Automatischer Analysator nach Anspruch 1, aufweisend:
eine Ladeeinheit (5) für eine dringende Probe, um eine dringende Probe entgegenzunehmen und sie zum ersten Puffer (7) zu befördern, und
eine Steuerung (101), um dann, wenn eine dringende Probe in die Ladeeinheit (5) für die dringende Probe gebracht wird, das Analysemodul (1, 2) so zu steuern, dass es die Probenentnahme für allgemeine Proben, die gegenwärtig der Probenentnahme unterworfen werden, beendet, und die Fördereinheit (9, 10) so zu steuern, dass sie allgemeine Proben, die noch der Probenentnahme unterworfen werden sollen, zum ersten Puffer (7) fördert, die dringende Probe zum Analysemodul fördert und allgemeine Proben im ersten Puffer (7) nach der Analyse der dringenden Probe zum Analysemodul fördert.

3. Analysator nach Anspruch 1, wobei die Fördereinheit (6, 9, 10) eine einzige Förderstrecke und einen Mechanismus zum Vor- und Zurückbewegen der Förderstrecke aufweist.

4. Analysator nach Anspruch 1, wobei die Fördereinheit (6, 9, 10) mindestens zwei Förderstrecken aufweist, die jeweils einen Mechanismus zum Vor- und Zurückbewegen der Förderstrecke enthalten.

5. Analysator nach Anspruch 1, wobei die Fördereinheit (6, 9, 10) mindestens zwei Förderstrecken aufweist, von denen eine (10) zur Vorwärtsbewegung und eine andere (9) zur Rückwärtsbewegung bestimmt ist.

6. Analysator nach einem der vorhergehenden Ansprüche, wobei die Probenpufferanordnung (7, 12) einen Aufbau aufweist, in dem mehrere Probengestelle (13) etwa entlang von Speichen eines drehbaren Sockels gehalten werden.

7. Analysator nach einem der Ansprüche 1 bis 5, wobei die Probenpufferanordnung (31, 34) einen Aufbau aufweist, der mehrere Probengestelle (13) auf einem Sockel Seite an Seite in im wesentlichen eine Richtung angeordnet hält und einen Mechanismus zum Bewegen des Sockels in eine Richtung enthält, die im wesentlichen senkrecht zur Richtung ist, in der die Probengestelle (13) angeordnet sind.

## Revendications

1. Analyseur automatique comportant :
un module d'analyse (1, 2) pour analyser des échantillons de corps vivant,
une unité d'alimentation en échantillons (3, 5) pour alimenter lesdits échantillons,
une unité de collecte d'échantillons (5) pour collecter lesdits échantillons,
une unité de convoyage (9, 10) pour convoyer des râteliers d'échantillons (13) avec des échantillons à analyser depuis ladite unité d'alimentation en échantillons (3, 5) dans ledit module d'analyse (1, 2) et convoyer des râteliers d'échantillons, pour lesquels un échantillonnage a été achevé, depuis ledit module d'analyse dans ladite unité de collecte d'échantillons (4), et
un agencement de tampons d'échantillons (7, 12, 31, 34) agencé sur l'unité de convoyage (9, 10) pour recevoir des échantillons depuis l'unité d'alimentation en échantillons (3, 5), les maintenir, alimenter ceux voulus parmi ceux-ci dans le module d'analyse, recevoir des échantillons renvoyés par le module d'analyse et alimenter des échantillons renvoyés dans l'unité de collecte d'échantillons,
**caractérisé en ce que**
ledit agencement de tampons d'échantillons comporte au moins deux tampons incluant un premier tampon (7) disposé sur une extrémité de ladite unité de convoyage (9, 10) pour recevoir des échantillons depuis l'unité d'alimentation en échantillons (3, 5), les maintenir et alimenter ceux voulus parmi ceux-ci dans ladite unité de convoyage (9, 10) pour les convoyer dans ledit module d'analyse (1, 2), et un second tampon (12, 31, 34) disposé sur l'autre extrémité de ladite unité de convoyage (9, 10) pour maintenir des échantillons pour lesquels un échantillonnage a été achevé, renvoyer des échantillons à ré-analyser dans ledit module d'analyse (1, 2) et renvoyer des échantillons qui ne sont pas à ré-analyser dans ladite unité de collecte d'échantillons (4),
dans lequel ladite unité de convoyage (9, 10) est adaptée pour transférer des échantillons pour lesquels l'échantillonnage est achevé dans ledit second tampon (12, 31, 34) pour qu'ils attendent des résultats d'analyse, et pour évacuer des échantillons toujours à soumettre à un échantillonnage dans ledit premier tampon (7) si un autre échantillon nécessite une analyse urgente, ledit premier tampon (7) étant adapté pour alimenter ledit échantillon nécessitant une analyse urgente dans le module d'analyse (1, 2) via l'unité de convoyage (9, 10) de laquelle des échantillons ont été évacués.

2. Analyseur automatique selon la revendication 1, comportant :
une unité de chargement d'échantillon urgent (5) pour recevoir un échantillon urgent et le convoyer dans le premier tampon (7), et
un système de commande (101) pour, lorsqu'un échantillon urgent est chargé dans l'unité de chargement d'échantillon urgent (5), commander ledit module d'analyse (1, 2) pour achever l'échantillonnage d'échantillons généraux qui sont soumis en même temps à un échantillonnage, et commander l'unité de convoyage (9, 10) pour convoyer des échantillons généraux toujours à soumettre à un échantillonnage dans le premier tampon (7), pour transporter l'échantillon urgent dans le module d'analyse et pour transporter des échantillons généraux du premier tampon (7) dans le module d'analyse après que ledit échantillon urgent ait été analysé.

3. Analyseur selon la revendication 1, dans lequel ladite unité de convoyage (6, 9, 10) a une ligne de convoyage et un mécanisme pour déplacer la ligne de convoyage en va-et-vient.

4. Analyseur selon la revendication 1, dans lequel ladite unité de convoyage (6, 9, 10) a au moins deux lignes de convoyage et chacune incluant un mécanisme pour déplacer la ligne de convoyage en va-et-vient.

5. Analyseur selon la revendication 1, dans lequel ladite unité de convoyage (6, 9, 10) a au moins deux lignes de convoyage, dont l'une (10) est dédiée à un mouvement vers l'avant et l'autre (9) est dédiée à un mouvement vers l'arrière.

6. Analyseur selon l'une quelconque des revendications précédentes, dans lequel l'agencement de tampons d'échantillons (7, 12) a une structure dans laquelle une pluralité de râteliers d'échantillons (13) sont maintenus sensiblement le long de rayons d'une base rotative.

7. Analyseur selon l'une quelconque des revendications 1 à 5, dans lequel l'agencement de tampons d'échantillons (31, 34) a une structure maintenant une pluralité de râteliers d'échantillons (13) agencés sur une base pour se trouver sensiblement côte à côte dans une direction, la structure incluant un mécanisme pour déplacer ladite base dans une direction sensiblement perpendiculaire à la direction dans laquelle lesdits râteliers d'échantillons (13) sont agencés.
